# EUROPÄISCHE PATENTSCHRIFT

(11) **EP 1 296 050 B1**
(45) Veröffentlichungstag und Bekanntmachung des Hinweises auf die Patenterteilung: **16.08.2006**
(21) Anmeldenummer: 01122902.8
(22) Anmeldetag: 25.09.2001
(51) Int. Cl.: F02D 41/40, F02D 33/02, F01N 3/023

(54) **Vorrichtung und Verfahren zur Regeneration einer Abgasbehandlungseinrichtung**
Apparatus and method for regeneration of exhaust treatment device
Système et procédé de régénération d'un dispositif de traitement de gaz d'échappement

(43) Veröffentlichungstag der Anmeldung: 26.03.2003
(73) Patentinhaber: Ford Global Technologies, LLC., Dearborn MI 48126 (US)
(72) Erfinder: Yacoub, Yasser Mohammed Sayed, 50858 Köln (DE); Christen, Urs, 52072 Aachen (DE); Moraal, Paul Eduard, 6291 VP Vaals (NL); Kuenstler, Johannes, 52064 Aachen (DE)
(74) Vertreter: Drömer, Hans-Carsten

(56) Entgegenhaltungen:
- EP-A- 1 035 313
- DE-A- 19 927 485
- FR-A- 2 774 427
- PATENT ABSTRACTS OF JAPAN vol. 2000, no. 05, 14. September 2000 (2000-09-14) & JP 2000 064889 A (NISSAN MOTOR CO LTD), 29. Februar 2000 (2000-02-29)

## Beschreibung

Die Erfindung betrifft ein Verfahren zur Regeneration einer Abgasbehandlungseinrichtung im Abgassystem einer Brennkraftmaschine, insbesondere eines Teilchenfilters im Abgassystem eines Dieselmotors, wobei die Temperatur und/oder die Kohlenwasserstoff-Konzentration der Abgase durch die Nacheinspritzung von Kraftstoff im Arbeitstakt der Brennkraftmaschine erhöht werden. Ferner betrifft die Erfindung eine Brennkraftmaschine, insbesondere einen Dieselmotor, welcher zur Durchführung des genannten Verfahrens ausgebildet ist.

Um die schädlichen Emissionen von Brennkraftmaschinen zu verringern, sind Abgasbehandlungseinrichtungen im Abgasweg erforderlich. Bei Dieselmotoren können diese insbesondere als Teilchenfilter ausgebildet sein, die unverbrannte Rußteilchen aus dem Abgas entfernen. Die Teilchenfilter müssen periodisch durch Verbrennen der angesammelten Filterrückstände regeneriert werden. Der in den Filterrückständen enthaltene Kohlenstoff zündet jedoch nur bei verhältnismäßig hohen Temperaturen von typischerweise ca. 550°C, wenn keine katalytische Unterstützung vorhanden ist. Derartige Temperaturen werden nur unter Bedingungen mit hoher Last und hoher Motordrehzahl erreicht. Um den Betrieb des Teilchenfilters sicherzustellen, müssen daher Maßnahmen getroffen werden, die Abgastemperatur während einer Regeneration unter allen Betriebsbedingungen des Motors auf hinreichend große Werte zu erhöhen.

Für eine derartige Erhöhung der Abgastemperaturen sind verschiedene Vorgehensweisen vorgeschlagen worden. So kann zum Beispiel durch Einschalten elektrischer Verbraucher die Motorbelastung künstlich erhöht werden, oder es kann zusätzlicher Kraftstoff in den Brennraum oder in die Abgasleitungen eingespritzt werden. Hierdurch werden dem Katalysator unverbrannte Kohlenwasserstoffe zugeführt, welche dann unter Erzeugung von Wärme in einem vor dem Teilchenfilter angeordneten Katalysator oxidiert werden.

Als besonders effizient hat sich dabei die Nacheinspritzung von Kraftstoff erwiesen, d.h. die Einspritzung einer zusätzlichen Kraftstoffmenge in einen oder in alle Zylinder nach der entsprechenden Haupteinspritzung und noch während des Arbeitstaktes des Zylinders. Abhängig von der Menge und dem Beginn der Nacheinspritzung verbrennt ein Teil der injizierten Kraftstoffmenge im Zylinder und trägt dabei sowohl zum Motordrehmoment als auch zur Erhöhung der Abgastemperatur am Auslaß des Motors bei. Der restliche Teil des Kraftstoffes verdampft und verläßt den Motor in Form unverbrannter Kohlenwasserstoffe. Wenn vor dem Teilchenfilter ein Oxidationskatalysator angeordnet ist und dieser eine ausreichend hohe Temperatur aufweist, oxidieren die unverbrannten Kohlenwasserstoffe in diesem Katalysator in einer exothermen Reaktion und erzeugen hierdurch einen zusätzlichen Temperaturanstieg der Abgase. Falls die Temperatur des Oxidationskatalysators allerdings zu gering ist, findet keine Oxidation der Kohlenwasserstoffe statt, und diese verlassen das Abgassystem unverbrannt als unerwünschte Emissionen.

Bei der Durchführung einer Nacheinspritzung sind die eingespritzte Kraftstoffmenge und insbesondere der Zeitpunkt der Einspritzung sehr genau abzustimmen, um sicherzustellen, daß die nachfolgenden Bedingungen eingehalten werden:
- kein Überschreiten der maximalen Temperaturgrenzen der Turbine und des Abgassystems;
- kein Überschreiten der maximal zulässigen freiwerdenden Reaktionswärme im Katalysator;
- kein Überschreiten der zulässigen Grenzwerte für Emissionen unverbrannter Kohlenwasserstoffe;
- kein Überschreiten der zulässigen Grenzwerte für das durch die Nacheinspritzung erzeugte zusätzliche Drehmoment.

Während die Beachtung all dieser Bedingungen schon unter normalen Verhältnissen anspruchsvoll ist, kommt erschwerend hinzu, daß in der Praxis stark variierende Umgebungsbedingungen herrschen. Diese wirken sich auf die im Zylinder zum Zeitpunkt der Nacheinspritzung herrschenden Verhältnisse (Temperatur, Druck) aus, welche wiederum entscheidenden Einfluß darauf haben, welcher Anteil des nachinjizierten Kraftstoffes verbrannt wird und welcher Anteil den Motor unverbrannt verläßt. Ein zu hoher Anteil unverbrannter Kohlenwasserstoffe kann dabei zu einer Abkühlung des Oxidationskatalysators bis unterhalb der Schwelltemperatur für eine Oxidation führen, was zu einem zusätzlichen Abfall der Abgastemperatur führt, so daß schließlich die gewünschte Regeneration des Teilchenfilters unterbleibt. Ferner führt eine zu hohe Kohlenwasserstoffkonzentration nach dem Katalysator zu einem unangenehmen nicht akzeptablen Geruch. Auch das Drehmoment kann in einer derartigen Situation geringer sein als es aufgrund der Stellung des Gaspedals erwartet wird.

Vor diesem Hintergrund war es Aufgabe der vorliegenden Erfindung, ein Verfahren zur Regeneration einer Abgasbehandlungseinrichtung bereitzustellen, durch welches die Auswirkungen einer Nacheinspritzung stabilisiert werden können.

Diese Aufgabe wird durch ein Verfahren mit den Merkmalen des Anspruchs 1 sowie durch eine Brennkraftmaschine mit den Merkmalen des Anspruchs 9 gelöst.

Vorteilhafte Ausgestaltungen sind in den Unteransprüchen enthalten.

Das vorgeschlagene Verfahren zur Regeneration einer Abgasbehandlungseinrichtung im Abgassystem einer Brennkraftmaschine kann insbesondere zur Regeneration eines Teilchenfilters im Abgassystem eines Dieselmotors eingesetzt werden. Bei dem Verfahren werden durch eine Nacheinspritzung von Kraftstoff im Arbeitstakt der Brennkraftmaschine die Temperatur der Abgase und / oder die Konzentration der unverbrannten Kohlenwasserstoffe im Abgas erhöht. Das Verfahren ist dadurch gekennzeichnet, daß die von der Motorsteuerung vorgegebenen Werte für den Ansaugdruck (MAP) und/oder für den Luftmassenstrom (MAF) in Abhängigkeit von einer Größe, deren Wert mit der Umgebungstemperatur des Motors oder des Kraftfahrzeuges korreliert ist, derart verändert werden, daß durch die Nacheinspritzung stabile Werte der Abgastemperatur und/oder der Kohlenwasserstoff-Konzentration im Abgas erzielt werden.

Das erfindungsgemäße Verfahren erreicht somit stabile Auswirkungen der Nacheinspritzung hinsichtlich der Abgastemperatur und der Kohlenwasserstoff-Konzentrationen dadurch, daß die Umgebungstemperatur des Motors bzw. des Kraftfahrzeuges bei der Einstellung des Ansaugdruckes und/oder des Luftmassenstromes berücksichtigt wird. Die Berücksichtigung erfolgt dabei in Form einer Korrektur der durch die Motorsteuerung aufgrund anderer, herkömmlicher Kriterien vorgegebenen Werte. Es hat sich gezeigt, daß durch eine derartige Maßnahme eine zuverlässige Regeneration der Abgasbehandlungseinrichtung, wie zum Beispiel des Teilchenfilters im Abgassystem eines Dieselmotors, auch bei stark variierenden Umgebungsbedingungen stattfinden kann. Dabei sind die für die Stabilisierung eingesetzten Mittel verhältnismäßig einfach, da der ohnehin regulierte Ansaugdruck bzw. Luftmassenstrom verwendet wird. Aufwendige weitere Maßnahmen - wie etwa eine Vorheizung der zugeführten Luftmassen zur Gewährleistung gleichmäßiger Temperaturen im Verbrennungsraum - sind dagegen nicht zwingend erforderlich.

Die vorgegebenen Werte für den Ansaugdruck und/oder den Luftmassenstrom können insbesondere derart verändert werden, daß zum Zeitpunkt der Nacheinspritzung die Temperatur im Verbrennungsraum der Brennkraftmaschine eine vorgegebene Schwelle nicht unterschreitet. Es hat sich gezeigt, daß die Temperatur im Verbrennungsraum zum Zeitpunkt der Nacheinspritzung entscheidenden Einfluß darauf hat, inwieweit die nacheingespritzte Kraftstoffmenge noch verbrennt bzw. den Motor unverbrannt verläßt. Wenn die Temperatur im Verbrennungsraum dabei insbesondere so geregelt wird, daß diese eine bestimmte Schwelle nicht unterschreitet, kann die gewünschte Stabilisierung der Werte für die Abgastemperatur und/oder die Kohlenwasserstoff-Konzentration erzielt werden.

Für die Bestimmung der Umgebungstemperatur stehen verschiedene indirekte Größen zur Verfügung, welche mit der Umgebungstemperatur korreliert sind. Vorzugsweise wird jedoch die Umgebungstemperatur durch einen geeigneten Sensor direkt gemessen, um mit verhältnismäßig geringem Aufwand einen zuverlässigen Wert hierfür zur Verfügung zu haben.

Gemäß einer speziellen Ausgestaltung des erfindungsgemäßen Verfahrens werden die vorgegebenen Werte für den Ansaugdruck und/oder für den Luftmassenstrom um so stärker reduziert, je geringer die Umgebungstemperatur des Motors oder des Kraftfahrzeuges ist. Die Reduzierung der Werte für den Ansaugdruck bzw. den Luftmassenstrom hat die Wirkung, daß die Verbrennung der Kraftstoffmenge aus der Haupteinspritzung langsamer verläuft, so daß zum Zeitpunkt der Nacheinspritzung noch höhere Temperaturen im Verbrennungsraum vorherrschen. Diese Maßnahme wird daher in vorteilhafter Weise um so stärker eingesetzt, je geringer die Umgebungstemperatur ist.

Gemäß einer Weiterbildung des Verfahrens werden die vorgegebenen Werte für den Ansaugdruck und/oder für den Luftmassenstrom zusätzlich korrigiert, wenn die Betriebstemperatur der Brennkraftmaschine noch nicht erreicht ist. Die Betriebstemperatur der Brennkraftmaschine kann dabei insbesondere über die Kühlmitteltemperatur oder aber auch über die Zylinderkopftemperatur erfaßt werden, welche ohnehin laufend gemessen und überwacht wird. Die Betriebstemperatur der Brennkraftmaschine stellt neben der Umgebungstemperatur einen weiteren entscheidenden Einflußfaktor dar, welcher die Höhe der Temperatur im Zylinder zum Zeitpunkt der Nacheinspritzung von Kraftstoff bestimmt.

Gemäß einer anderen Weiterbildung der Erfindung werden die vorgegebenen Werte für den Ansaugdruck und/oder den Luftmassenstrom bei geringer Motorlast derart reduziert, daß durch die Nacheinspritzung stabile Werte der Abgastemperatur und/oder der Kohlenwasserstoff-Konzentration im Abgas erzielt werden. D.h., daß auch eine geringe Motorlast unabhängig von bzw. zusätzlich zur Temperatur der Umgebung zu einer Reduzierung des Ansaugdruckes / Luftmassenstromes führen kann. Es hat sich nämlich gezeigt, daß die Auswirkung der Nacheinspritzung bei geringen Motorlasten, bei denen im Rahmen der Haupteinspritzung nur geringe Kraftstoffmengen zugeführt werden, besonders ausgeprägt ist. Es ist daher von Vorteil, wenn durch eine Reduzierung des Ansaugdruckes bzw. des Luftmassenstromes zum Zeitpunkt der Nacheinspritzung eine höhere Temperatur im Verbrennungsraum erzeugt wird. Diese Reduktion des Ansaugdruckes / Luftmassenstromes findet insbesondere auch dann statt, wenn die Umgebungstemperatur im normalen Bereich liegt und daher ihrerseits keine eigene Reduzierung der genannten Werte verursacht.

Die als Ausgangspunkt des erfindungsgemäßen Verfahrens dienenden vorgegebenen Werte für den Ansaugdruck und / oder den Luftmassenstrom können in herkömmlicher Weise von einer Motorsteuerung bestimmt werden. Insbesondere können sie in Abhängigkeit von der Motordrehzahl und der Motorlast oder dem gewünschten Motordrehmoment festgelegt werden.

Um auch während der Regeneration der Abgasbehandlungseinrichtung ein ausreichend gutes Fahrverhalten sicherzustellen, kann die Veränderung der vorgegebenen Werte für den Ansaugdruck und/oder den Luftmassenstrom reduziert oder sogar ganz aufgehoben werden, wenn eine hohe Beschleunigung und/oder eine hohe Motorlast vorliegen bzw. gewünscht sind. In diesen Fällen wäre die mit der Änderung des Ansaugdruckes bzw. des Luftmassenstromes einhergehende Verringerung der Motorleistung nachteilig.

Die Erfindung betrifft ferner eine Brennkraftmaschine mit einer im Abgassystem angeordneten Abgasbehandlungseinrichtung und mit einer Steuereinrichtung zur Regeneration der Abgasbehandlungseinrichtung durch Erhöhung der Temperatur und/oder der Kohlenwasserstoff-Konzentration der Abgase. Bei der Brennkraftmaschine kann es sich insbesondere um einen Dieselmotor und bei der Abgasbehandlungseinrichtung insbesondere um einen Teilchenfilter handeln. Die Steuereinrichtung ist derart ausgestaltet und derart mit Sensoren und Aktuatoren verbunden, daß diese ein Verfahren der vorstehend erläuterten Art ausführen kann.

D.h., daß diese Steuereinrichtung insbesondere eine Einheit zur Erfassung einer mit der Umgebungstemperatur korrelierten Größe enthält, und daß die Steuereinheit Einfluß auf den eingestellten Ansaugdruck und/oder den Luftmassenstrom nehmen kann. Dieser Einfluß wird dabei in Abhängigkeit von der genannten korrelierenden Größe derart ausgeübt, daß vorgegebene Werte für den Ansaugdruck und/oder den Luftmassenstrom derart verändert werden, daß durch die Nacheinspritzung stabile Werte der Abgastemperatur und/oder der Kohlenwasserstoff-Konzentration im Abgas erzielt werden.

Vorzugsweise ist die Steuereinrichtung mit einem Temperatursensor verbunden, welcher die Umgebungstemperatur des Motors und/oder des Kraftfahrzeuges und/oder die Temperatur der Ladeluft mißt. Dieser Meßwert kann dann bei der Veränderung des Ansaugdruckes und/oder des Luftmassenstromes berücksichtigt werden.

Im Folgenden wird die Erfindung anhand der Figuren beispielhaft näher erläutert.
Es zeigen:
- Figur 1: schematisch die Komponenten eines Dieselmotors mit einer Abgasbehandlungseinrichtung,
- Figur 2: qualitativ die Abhängigkeit der Wirkung der Nacheinspritzung von der Umgebungstemperatur,
- Figur 3: die Abgastemperatur und die Kohlenwasserstoff-Konzentration im Abgas in Abhängigkeit vom Zeitpunkt der Nacheinspritzung beim Stand der Technik,
- Figur 4: die Abgastemperatur und die Konzentration der Kohlenwasserstoffe im Abgas in Abhängigkeit vom Zeitpunkt der Nacheinspritzung bei Anwendung des erfindungsgemäßen Verfahrens.

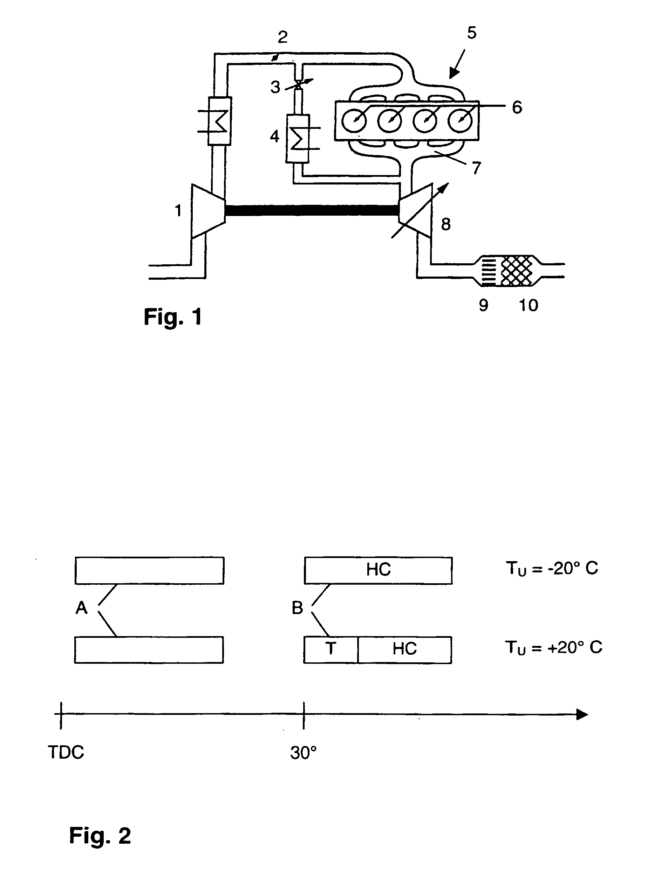

In Figur 1 ist eine typische Anordnung um einen Dieselmotor 5 dargestellt, bei welcher das erfindungsgemäße Verfahren vorteilhaft angewendet werden kann. Bei dieser Anordnung wird über einen Kompressor 1 Luft angesaugt und dem Dieselmotor 5 über dessen Ansaugkrümmer verdichtet zur Verfügung gestellt. Im Luftweg von dem Kompressor 1 zu dem Dieselmotor 5 ist dabei eine Einlaßdrossel 2 vorgesehen. In die Zylinder des Dieselmotors 5 wird über Kraftstoffeinspritzdüsen 6 Kraftstoff eingespritzt und zusammen mit der Luft verbrannt. Die Kraftstoffeinspritzdüsen und die Motorsteuerung sind dabei insbesondere derart ausgebildet, daß diese mehrere Kraftstoffeinspritzungen pro Arbeitstakt ausführen können, insbesondere eine Nacheinspritzung während des Arbeitstaktes nach der Haupteinspritzung.

Die bei der Verbrennung entstehenden Abgase verlassen den Dieselmotor über einen Abgaskrümmer 7. Ein Teil dieser Abgase wird über eine Abgasrückführung zur Eingangsseite des Dieselmotors zurückgeführt. Diese Abgasrückführung führt über einen EGR-Kühler 4 sowie ein EGR-Ventil 3. Über das Ventil 3 kann das Ausmaß der Abgasrückführung kontrolliert werden. Der nicht rückgeführte Teil der Abgase strömt über eine Turbine 8 mit variabler Geometrie (VGT), welche durch den Abgasstrom in Rotation versetzt wird und ihrerseits den Kompressor 1 antreibt. Die Abgasrückführung und die Turbine 8 sind für die Ausführung des erfindungsgemäßen Verfahrens nicht unbedingt erforderlich.

Die Abgase fließen weiter in eine Abgasreinigung, welche aus einem Oxidationskatalysator 9 und einem in Strömungsrichtung dahinter gelegenen Teilchenfilter 10 besteht.

Zur Reinigung des Teilchenfilters 10 von Kohlenstoffrückständen ist es bekannt, die Abgastemperatur so weit zu erhöhen, daß die Rückstände verbrennen. Eine besonders geeignete Maßnahme zur Erhöhung der Abgastemperatur stellt dabei die Nacheinspritzung von Kraftstoff während des Arbeitstaktes der Zylinder dar. Eine derartige Nacheinspritzung ist in Figur 2 schematisch dargestellt. Dabei ist auf der horizontalen Achse der Zeitpunkt des Motortaktes in Winkelgraden bezogen auf den oberen Totpunkt (TDC) aufgetragen. Über der horizontalen Achse sind als Blöcke die Haupteinspritzung A sowie die Nacheinspritzung B dargestellt, wobei die Nacheinspritzung 30° nach dem oberen Totpunkt beginnt. Die untere Zeile der Einspritzungsblöcke gilt für eine Umgebungstemperatur T_{U} von 20° Celsius, während die obere Zeile für eine Umgebungstemperatur T_{U} von -20° Celsius zutrifft.

Durch eine Teilung des Blockes für die nachinjizierte Kraftstoffmenge B in zwei Teilblöcke "T" und "HC" wird angedeutet, daß ein Teil (T) des nachinjizierten Kraftstoffes B im Zylinder verbrennt und hierdurch zu einer Temperaturerhöhung führt, während der restliche Kraftstoff den Zylinder unverbrannt als Kohlenwasserstoff (HC) verläßt.

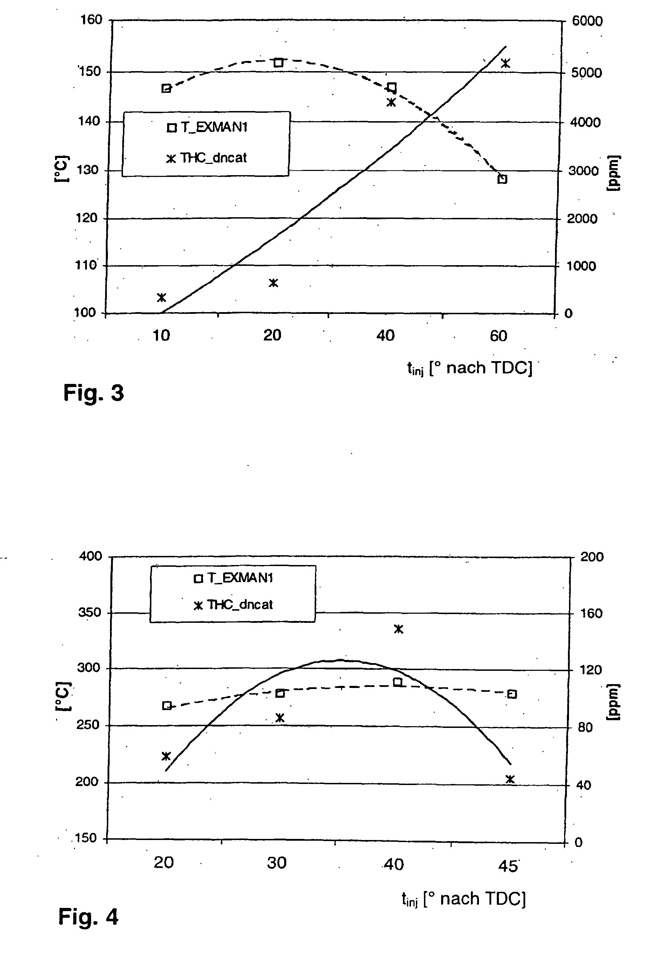

Wie groß der Anteil verbrannten Kraftstoffes (T) bzw. unverbrannten Kraftstoffes (HC) jeweils ist, hängt entscheidend vom Zeitpunkt der Nacheinspritzung ab. Diese Abhängigkeit ist in Figur 3 auf der Basis von Meßwerten graphisch aufgetragen. Die linke vertikale Achse sowie die gestrichelte Kurve entsprechen dabei der Abgastemperatur, während die rechte vertikale Achse und die durchgezogene Kurve die Konzentration der den Motor verlassenden Kohlenwasserstoffe wiedergeben. Beide Kurven sind jeweils in Abhängigkeit vom Beginn der Nacheinspritzung aufgetragen, der in Winkelgraden nach dem oberen Totpunkt gemessen wird. Den Meßwerten liegen im Übrigen konstante Betriebsbedingungen des Motors (Drehzahl 1000 U/min, Drehmoment 10 Nm) zugrunde.

Aus Figur 3 ist erkennbar, daß ein sehr markanter Anstieg der Kohlenwasserstoff-Konzentration auftritt, sobald der Zeitpunkt der Nacheinspritzung ein bestimmtes Niveau überschreitet. Die genaue Lage dieses Niveaus hängt dabei von den Bedingungen im Zylinder zum Zeitpunkt der Nacheinspritzung ab.

Weiterhin hängt die Auswirkung einer Kraftstoffnacheinspritzung kritisch von den Umgebungsbedingungen ab. Dies ist aus der oberen Zeile von Figur 2 ersichtlich, in welcher die "Aufteilung" des nachinjizierten Kraftstoffes in einen verbrannten und unverbrannten Anteil (HC) bei einer Umgebungstemperatur von minus 20 Grad Celsius aufgetragen ist. Alternativ zur Umgebungslufttemperatur könnte auch die Temperatur der Luft im Einlaß des Motors betrachtet werden. Bei derartig tiefen Temperaturen findet keine nennenswerte Verbrennung des nacheingespritzten Kraftstoffes mehr statt, so daß dieser den Motor vollständig in Form von verdampften Kohlenwasserstoffen verläßt. Das heißt, daß es im Motor zu keiner Temperaturerhöhung durch die Nacheinspritzung kommt, und daß die Kohlenwasserstoffe zusätzlich zu einer Abkühlung des Oxidationskatalysators führen. Im schlimmsten Falle sinkt dadurch die Temperatur des Oxidationskatalysators unter die zur Oxidation der Kohlenwasserstoffe notwendige Temperatur, so daß die Kohlenwasserstoffe der Nacheinspritzung das Kraftfahrzeug ausschließlich als schädliche Emissionen verlassen.

Die Sensitivität der Verbrennung der Nacheinspritzung gegenüber dem Zeitpunkt der Einspritzung ist bei geringen Motorlasten besonders ausgeprägt. Bei geringen Motorlasten ist die durch die Verbrennung der Haupteinspritzung entstehende Energie verhältnismäßig gering. Wenn die Nacheinspritzung zu spät kommt, werden nur unverbrannte Kohlenwasserstoffe erzeugt. Wenn andererseits die Nacheinspritzung zu früh kommt, verbrennt die nacheingespritzte Kraftstoffmenge vollständig und führt zu einer Erhöhung der Drehmomentabgabe des Motors ohne signifikante Erhöhung der Abgastemperatur. Zwar kann die Drehmomenterhöhung durch eine entsprechende Reduzierung der Haupteinspritzung kompensiert werden. Es existiert jedoch eine untere Grenze für die Einspritzungsmenge, unterhalb derer die Einspritzungsvorrichtungen nicht mehr ausreichend genau arbeiten. Diese untere Grenze ist bei geringer Motorlast für die Haupteinspritzung schon bei normalem Motorbetrieb nahezu erreicht (ca. 6 - 8 mg/Takt).

Gerade bei geringen Motorlasten besteht daher ein enges Zeitfenster für die Nacheinspritzung einer bestimmten Menge an Kraftstoff. Wird dieses Fenster in Richtung einer zu frühen Einspritzung verlassen, steigt das Motordrehmoment ohne einen entsprechenden Anstieg der Abgastemperatur. Wird es in Richtung zu später Nacheinspritzung verlassen, steigt die Kohlenwasserstoff-Konzentration rasch über das zulässige Niveau hinaus an, und die Abgastemperatur nimmt wiederum nicht ausreichend zu.

Um die vorstehend geschilderten Probleme zu lösen, wird erfindungsgemäß von der Einlaßdrossel Gebrauch gemacht, um eine stabile Verbrennung des nacheingespritzten Kraftstoffes unabhängig von den Umgebungsbedingungen sicherzustellen. Die Funktion der Drosselklappe besteht dabei in einer Erweiterung des vorstehend genannten Zeitfensters, innerhalb dessen eine Nacheinspritzung zur Erreichung der gewünschten Ziele vorgenommen werden kann. Mit anderen Worten heißt dies, daß die Sensitivität des Zeitpunktes der Nacheinspritzung in Bezug auf die Umgebungsbedingungen reduziert wird. Diese Wirkung wird in folgender Weise erreicht:

Bei kalten Umgebungsbedingungen, die über einen am Fahrzeug, in der Nähe des Motors oder im Ansaugkrümmer angeordneten Temperatursensor erfaßt werden, wird der Strom der Einlaßluft über einen Ansaugdruckregler (MAP) oder einen Massenstromregler (MAF) gedrosselt. Nachfolgend soll angenommen werden, daß der Ansaugdruck kontrolliert wird, wobei jedoch dieselben Prinzipien bei einer Regelung des Luftmassenstromes auf einen vorgegebenen Wert angewendet werden können.

Der Vorgabewert des Ansaugdruckes wird aus einer kalibrierten Abbildung bzw. einem Tabellenspeicher bestimmt, die bzw. der eine Funktion der Motordrehzahl und Motorlast (oder des gewünschten Drehmomentes) darstellt. Der Vorgabewert wird dann bezüglich der Umgebungstemperatur korrigiert. Zusätzliche Korrekturen des Vorgabewertes - wie zum Beispiel bei einer zu geringen Kühlmitteltemperatur od. dgl. - können ebenfalls durchgeführt werden. Dabei wird bei geringen Umgebungstemperaturen insbesondere der Einlaß auf einen niedrigeren Wert des Ansaugdruckes gedrosselt. Einzelheiten zur Durchführung einer entsprechenden Kontrolle der Drosselklappe bei Vorgabe eines Ansaugdruckes können der US 09/538521 entnommen werden.

Die Reduzierung des Ansaugdruckes hat die Folge, daß die Verbrennungsrate verlangsamt wird, wodurch die Temperatur im Zylinder zum Zeitpunkt der Nacheinspritzung im Vergleich zum ungedrosselten Fall erhöht wird. Aus diesem Grunde kann die Verbrennung bei der Nacheinspritzung mit derselben Stabilität durchgeführt werden wie unter normalen Umgebungsbedingungen.

Bei einem Betrieb unter geringerer Motorlast wird der Strom der Einlaßluft unter Verwendung der vorstehend geschilderten Maßnahmen gleichermaßen gedrosselt. D.h., daß der Vorgabewert des Ansaugdruckes in derselben Weise als Funktion der Drehzahl, der Last, der Umgebungs- bzw. Einlaßtemperatur, der Kühlmitteltemperatur und dergleichen erzeugt wird. Wenn die Motorlast gering ist, wird auch bei normalen Umgebungsbedingungen der Ansaugdruck reduziert. Dies hat zweierlei Effekte: Zum einen wird die Verbrennungsrate aufgrund des reduzierten Druckes beim Beginn der Haupteinspritzung reduziert, zum anderen erhöht sich die Temperatur im Zylinder nach der Haupteinspritzung aufgrund des reduzierten Massenflusses. Beide Effekte führen dazu, daß die Temperatur im Zylinder zum Zeitpunkt der Nacheinspritzung erhöht ist, und daß sich das Zeitfenster verbreitert, innerhalb dessen die Nacheinspritzung stattfinden muß, um eine vollständige Verbrennung zu erreichen.

Figur 4 zeigt die oben erläuterten Effekte in einem Meßdatendiagramm. Die Bedeutung der Achsen und der Kurven ist dabei ähnlich zu Figur 3 gewählt, wobei jedoch auf die unterschiedlichen Wertebereiche der Achsen hingewiesen sei. Aus Figur 4 ist erkennbar, daß unter Anwendung der erfindungsgemäßen Strategie im betrachteten Zeitintervall der Nacheinspritzung eine wesentlich weniger kritische Abhängigkeit der Abgastemperatur und der Konzentration an unverbrannten Kohlenwasserstoffen besteht als ohne Anwendung der Erfindung.

Um negative Auswirkungen der erfindungsgemäßen Drosselungsstrategie auf das Fahrverhalten des Kraftfahrzeuges auszuschließen, kann bei Anforderung hoher Beschleunigungen oder bei einem Betrieb in der Nähe der Vollast die Drosselung reduziert bzw. ganz aufgehoben werden.

## Patentansprüche

1. Verfahren zur Regeneration einer Abgasbehandlungseinrichtung im Abgassystem einer Brennkraftmaschine, insbesondere eines Teilchenfilters (10) im Abgassystem eines Dieselmotors (5), wobei die Temperatur und/oder die Kohlenwasserstoff-Konzentration der Abgase durch die Nacheinspritzung von Kraftstoff im Arbeitstakt der Brennkraftmaschine erhöht werden,
**dadurch gekennzeichnet, daß**
die vorgegebenen Werte für den Ansaugdruck (MAP) und/oder den Luftmassenstrom (MAF) in Abhängigkeit von einer mit der Umgebungstemperatur korrelierten Größe derart verändert werden, daß durch die Nacheinspritzung stabile Werte der Abgastemperatur und/oder der Kohlenwasserstoff-Konzentration im Abgas erzielt werden.

2. Verfahren nach Anspruch 1,
**dadurch gekennzeichnet, daß**
die vorgegebenen Werte für den Ansaugdruck (MAP) und/oder den Luftmassenstrom (MAF) derart verändert werden, daß zum Zeitpunkt der Nacheinspritzung die Temperatur im Verbrennungsraum der Brennkraftmaschine (5) eine vorgegebene Schwelle nicht unterschreitet.

3. Verfahren nach Anspruch 1 oder 2,
**dadurch gekennzeichnet, daß**
die Umgebungstemperatur direkt gemessen wird.

4. Verfahren nach einem der Ansprüche 1 bis 3,
**dadurch gekennzeichnet, daß**
die vorgegebenen Werte für den Ansaugdruck (MAP) und/oder den Luftmassenstrom (MAF) um so stärker reduziert werden, je geringer die Umgebungstemperatur ist.

5. Verfahren nach einem der Ansprüche 1 bis 4,
**dadurch gekennzeichnet, daß**
die vorgegebenen Werte für den Ansaugdruck (MAP) und/oder den Luftmassenstrom (MAF) um so stärker reduziert werden, je geringer die Betriebstemperatur der Brennkraftmaschine (5) ist, wobei diese vorzugsweise über die Kühlmitteltemperatur erfaßt wird.

6. Verfahren nach einem der Ansprüche 1 bis 5,
**dadurch gekennzeichnet, daß**
die vorgegebenen Werte für den Ansaugdruck (MAP) und/oder den Luftmassenstrom (MAF) bei geringer Motorlast derart reduziert werden, daß durch die Nacheinspritzung stabile Werte der Abgastemperatur und/oder der Kohlenwasserstoff-Konzentration im Abgas erzielt werden.

7. Verfahren nach einem der Ansprüche 1 bis 6,
**dadurch gekennzeichnet, daß**
die vorgegebenen Werte für den Ansaugdruck (MAP) und/oder den Luftmassenstrom (MAF) in Abhängigkeit von der Motordrehzahl und der Motorlast oder dem gewünschten Motordrehmoment festgelegt werden.

8. Verfahren nach einem der Ansprüche 1 bis 7,
**dadurch gekennzeichnet, daß**
die Veränderung der vorgegebenen Werte für den Ansaugdruck (MAP) und/oder den Luftmassenstrom (MAF) reduziert oder aufgehoben wird, wenn eine hohe Beschleunigung und/oder Motorlast erforderlich ist.

9. Brennkraftmaschine, insbesondere Dieselmotor (5), mit einer im Abgassystem angeordneten Abgasbehandlungseinrichtung, insbesondere einem Teilchenfilter (10), und mit einer Steuereinrichtung zur Regeneration der Abgasbehandlungseinrichtung durch Erhöhung der Temperatur und/oder der Kohlenwasserstoff-Konzentration der Abgase, wobei die Steuereinrichtung derartig ausgebildet und mit Sensoren und Aktuatoren verbunden ist,
**dadurch gekennzeichnet, daß**
diese ein Verfahren nach einem der Ansprüche 1 bis 8 ausführen kann.

10. Brennkraftmaschine nach Anspruch 9,
**dadurch gekennzeichnet, daß**
die Steuereinrichtung mit einem Temperatursensor für die Umgebungstemperatur verbunden ist.

## Claims

1. Method for regenerating an exhaust gas treatment device in the exhaust system of an internal combustion engine, in particular a particle filter (10) in the exhaust system of a diesel engine (5), the temperature and/or the concentration of hydrocarbons of the exhaust gases being increased by the post-injection of fuel in the work cycle of the internal combustion engine, **characterized in that** the predefined values for the intake pressure (MAP) and/or the air mass flow rate (MAF) are changed as a function of a variable which is correlated to the ambient temperature, in such a way that stable values of the exhaust gas temperature and/or of the concentration of hydrocarbons in the exhaust gas are achieved by the post-injection.

2. Method according to Claim 1, **characterized in that** the predefined values for the intake pressure (MAP) and/or the air mass flow rate (MAF) are changed in such a way that the temperature in the combustion space of the internal combustion engine (5) does not drop below a predefined threshold at the time of the post-injection.

3. Method according to Claim 1 or 2, **characterized in that** the ambient temperature is measured directly.

4. Method according to one of Claims 1 to 3, **characterized in that** the lower the ambient temperature the greater the reduction in the predefined values for the intake pressure (MAP) and/or the air mass flow rate (MAF).

5. Method according to one of Claims 1 to 4, **characterized in that** the lower the operating temperature of the internal combustion engine (5) the greater the reduction in the predefined values for the intake pressure (MAP) and/or the air mass flow rate (MAF), said operating temperature being preferably registered by means of the temperature of the coolant.

6. Method according to one of Claims 1 to 5, **characterized in that** the predefined values for the intake pressure (MAP) and/or the air mass flow rate (MAF) are reduced when the engine load is low in such a way that stable values of the exhaust gas temperature and/or the concentration of hydrocarbons in the exhaust gas are achieved by means of the post-injection.

7. Method according to one of Claims 1 to 6, **characterized in that** the predefined values for the intake pressure (MAP) and/or the air mass flow rate (MAF) are defined as a function of the engine speed and the engine load or the desired engine torque.

8. Method according to one of Claims 1 to 7, **characterized in that** the change in the predefined values for the intake pressure (MAP) and/or the air mass flow rate (MAF) is reduced or eliminated if a high acceleration and/or large engine load are necessary.

9. Internal combustion engine, in particular diesel engine (5), having an exhaust gas treatment device, in particular a particle filter (10), arranged in the exhaust gas system, and having a control device for regenerating the exhaust gas treatment device by increasing the temperature and/or the concentration of hydrocarbons of the exhaust gases, the control device being embodied, and connected to sensors in such a way, **characterized in that** said internal combustion engine can execute a method according to one of Claims 1 to 8.

10. Internal combustion engine according to Claim 9, **characterized in that** the control device is connected to a temperature sensor for the ambient temperature.

## Revendications

1. Procédé de régénération d'un dispositif de traitement de gaz d'échappement dans le système d'échappement d'un moteur à combustion interne, notamment d'un filtre à particules (10) dans le système d'échappement d'un moteur diesel (5), dans lequel la température et/ou la concentration en hydrocarbures des gaz d'échappement sont augmentées par la post-injection de carburant dans le temps de travail du moteur à combustion interne,
**caractérisé en ce que**
les valeurs prédéfinies pour la pression d'admission (MAP) et/ou le débit massique d'air (MAF) sont modifiées en fonction d'une grandeur corrélée à la température de l'environnement de telle sorte que l'on obtienne par la post-injection des valeurs stables de la température des gaz d'échappement et/ou de la concentration en hydrocarbures dans le gaz d'échappement.

2. Procédé selon la revendication 1,
**caractérisé en ce que**
les valeurs prédéfinies pour la pression d'admission (MAP) et/ou le débit massique d'air (MAF) sont modifiées de telle sorte qu'à l'instant de la post-injection, la température dans la chambre de combustion du moteur à combustion interne (5) ne soit pas inférieure à un seuil prédéfini.

3. Procédé selon la revendication 1 ou 2,
**caractérisé en ce que**
la température de l'environnement est mesurée directement.

4. Procédé selon l'une quelconque des revendications 1 à 3,
**caractérisé en ce que**
les valeurs prédéfinies pour la pression d'admission (MAP) et/ou le débit massique d'air (MAF) sont d'autant plus réduites que la température de l'environnement est basse.

5. Procédé selon l'une quelconque des revendications 1 à 4,
**caractérisé en ce que**
les valeurs prédéfinies pour la pression d'admission (MAP) et/ou le débit massique d'air (MAF) sont d'autant plus réduites que la température de fonctionnement du moteur à combustion interne (5) est basse, celle-ci étant de préférence détectée par le biais de la température du réfrigérant.

6. Procédé selon l'une quelconque des revendications 1 à 5,
**caractérisé en ce que**
les valeurs prédéfinies pour la pression d'admission (MAP) et/ou le débit massique d'air (MAF) pour une faible charge du moteur sont réduites de telle sorte que l'on obtienne par la post-injection des valeurs stables de la température des gaz d'échappement et/ou de la concentration en hydrocarbures dans le gaz d'échappement.

7. Procédé selon l'une quelconque des revendications 1 à 6,
**caractérisé en ce que**
les valeurs prédéfinies pour la pression d'admission (MAP) et/ou le débit massique d'air (MAF) sont établies en fonction du régime du moteur et de la charge du moteur ou du couple souhaité pour le moteur.

8. Procédé selon l'une quelconque des revendications 1 à 7,
**caractérisé en ce que**
la variation des valeurs prédéfinies pour la pression d'admission (MAP) et/ou le débit massique d'air (MAF) est réduite ou supprimée lorsqu'une accélération et/ou une charge du moteur élevées sont requises.

9. Moteur à combustion interne, notamment moteur diesel (5) comprenant un dispositif de traitement des gaz d'échappement disposé dans le système d'échappement, notamment un filtre à particules (10) et comprenant un dispositif de commande pour la régénération du dispositif de traitement des gaz d'échappement par augmentation de la température et/ou de la concentration en hydrocarbures des gaz d'échappement, le dispositif de commande étant réalisé de la sorte et étant connecté à des capteurs et des actionneurs,
**caractérisé en ce que**
celui-ci peut mettre en oeuvre un procédé selon l'une quelconque des revendications 1 à 8.

10. Moteur à combustion interne selon la revendication 9,
**caractérisé en ce que**
le dispositif de commande est connecté à un capteur de température pour la température de l'environnement.
